Europäisches Patentamt

European Patent Office

Office européen des brevets

(19)

(11) EP 1 072 376 A1

(12) **EUROPÄISCHE PATENTANMELDUNG**

(43) Veröffentlichungstag:
31.01.2001 Patentblatt 2001/05

(51) Int. Cl.⁷: **B29C 45/00**, B29C 45/42

(21) Anmeldenummer: 00115211.5

(22) Anmeldetag: 13.07.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.07.1999 DE 19935139**

(71) Anmelder:
**HEKUMA Herbst Maschinenbau GmbH
85386 Eching (DE)**

(72) Erfinder: **Herbst, Richard
85386 Eching (DE)**

(74) Vertreter:
**Witte, Alexander, Dr.-Ing. et al
Witte, Weller, Gahlert, Otten & Steil,
Patentanwälte,
Postfach 105 462
70047 Stuttgart (DE)**

(54) **Verfahren und Vorrichtung zum Herstellen eines Kunststoffkörpers**

(57) Ein Verfahren und eine Vorrichtung dienen zum Herstellen eines Kunststoffkörpers (10), insbesondere einer Schraubkappe. Der Kunststoffkörper (10) wird zunächst in einem Formhohlraum eines Spritzgießwerkzeugs mit einer ersten Formgebung (10') spritzgegossen. Anschließend wird der Kunststoffkörper (10) mit einem Entnahmewerkzeug (60) aus dem Formhohlraum entformt. Erfindungsgemäß wird der Kunststoffkörper (10) dabei mit dem Entnahmewerkzeug (60) in eine zweite Formgebung umgeformt.

Fig.5

EP 1 072 376 A1

**Beschreibung**

Die Erfindung betrifft ein Verfahren zum Herstellen eines Kunststoffkörpers, bei dem der Kunststoffkörper zunächst in einem Formhohlraum eines Spritzgießwerkzeugs mit einer ersten Formgebung spritzgegossen wird und bei dem der Kunststoffkörper anschließend mit einem Entnahmewerkzeug aus dem Formhohlraum entformt wird.

Die Erfindung betrifft des weiteren eine Vorrichtung zum Herstellen eines Kunststoffkörpers, mit einem Spritzgießwerkzeug, das zumindest einen Formhohlraum aufweist, wobei der Formhohlraum komplementär zu einer ersten Formgebung des Kunststoffkörpers ausgebildet ist, und mit einem Entnahmewerkzeug zum Entformen des Kunststoffkörpers aus dem Formhohlraum.

Ein Verfahren und eine Vorrichtung der vorstehend genannten Art sind bspw. aus der DE-A-37 08 472 bekannt.

Die Erfindung betrifft insbesondere Verfahren und Vorrichtungen zum Herstellen von Kunststoffkörpern, die eine Hinterschneidung aufweisen. Als Hinterschneidung wird dabei im Zusammenhang mit der Erfindung ein Bereich verstanden, der hinter einem Vorsprung gebildet ist und der somit ein einfaches Entformen des Kunststoffkörpers durch Herausziehen aus dem Formhohlraum bzw. durch Abziehen von einem Kern verhindert. Das Innengewinde einer Schraubkappe, wie sie bspw. zum Verschließen von Flaschen und flaschenartigen Behälter verwendet wird, ist ein Beispiel für eine Form mit derartigen Hinterschneidungen. Die Erfindung wird daher nachfolgend am Beispiel von Schraubkappen dargestellt, obwohl die Erfindung nicht auf diesen Anwendungsfall beschränkt ist.

Ein weiterer Aspekt der Erfindung bezieht sich auf das Umformen eines geformten Kunststoffkörpers mit dem Ziel, dessen Qualität zu verbessern. Dies betrifft insbesondere die Beseitigung von unschönen Angußzapfen, wie sie beim Spritzgießen von Kunststoffkörpern im Bereich des oder der Angußpunkte gebildet werden.

Bei bekannten Verfahren und Vorrichtungen der eingangs genannten Art werden zum Herstellen von Schraubkappen Werkzeuge für Kunststoff-Spritzgießmaschinen eingesetzt, die über eine spezielle Abschraubvorrichtung verfügen. In der einen Werkzeughälfte, üblicherweise der stationären Werkzeughälfte, befindet sich ein Formhohlraum oder meist sogar eine Vielzahl derartiger Formhohlräume. In der anderen, üblicherweise der beweglichen Werkzeughälfte ist eine entsprechende Anzahl von Kernen vorgesehen, die über diese Werkzeughälfte vorstehen und daher bei geschlossenem Werkzeug in den jeweils zugehörigen Formhohlraum hineinragen. Die Kerne sind an ihrem Außenumfang mit einem Außengewinde versehen, das zu dem herzustellenden Innengewinde der Schraubkappen komplementär ist. Die Kerne sind ferner in der beweglichen Werkzeughälfte drehbar gelagert, bspw. über Ritzel-Zahnstangen-Antriebe.

Beim Spritzgießen der Schraubkappen wird der Formhohlraum mit flüssiger Kunststoffschmelze ausgespritzt. Zum Entformen der Schraubkappen werden dann die beiden Werkzeughälften auseinandergefahren. Da die gespritzten Schraubkappen das Außengewinde der Kerne formschlüssig umschließen, werden die Schraubkappen zusammen mit den Kernen aus den Formhohlräumen herausgezogen, wenn die bewegliche Werkzeughälfte von der stationären Werkzeughälfte weg bewegt wird.

Um die Schraubkappe nun von den Außengewinden der Kerne zu entformen, werden diese aus den Schraubkappen mittels der erwähnten Antriebe herausgeschraubt.

Es liegt auf der Hand, daß diese herkömmliche Vorgehensweise sehr zeitaufwendig ist, so daß die Zykluszeit der Kunststoff-Spritzgießmaschinen dadurch recht groß ist.

Es ist ferner bekannt, zum Spritzgießen von Kunststoffkörpern mit Innengewinde oder, allgemeiner ausgedrückt, mit Hinterschneidungen spezielle Werkzeug einzusetzen, bei denen die Kerne nach dem Spritzgießvorgang zusammengeklappt oder sonstwie ineinandergefahren, um so aus dem fertigen Kunststoffteil herausgefahren werden zu können.

Aus der eingangs erwähnten DE-A-37 08 472 ist ein Schraubteil aus Kunststoff bekannt, nämlich eine Schraubkappe, wie sie auf Kunststoffflaschen zum Verschließen derselben aufgeschraubt werden kann.

Zum schnelleren Entformen dieser Schraubteile ist vorgesehen, das Innengewinde der Schraubteile lediglich segmentweise auszubilden, wobei zwischen den Gewindesegmenten axial verlaufende Zwischenräume oder Lücken vorgesehen sein können. Zum Entformen dieser bekannten Schraubteile werden dieselben "mit Gewalt" axial vom Kern abgezogen, wobei die Gänge der Gewindesegmente einerseits und die Lücken andererseits so dimensioniert sind, daß die Gewindegänge über die entsprechenden Gänge des komplementären Kerns hinüberrutschen, andererseits aber durch die segmentartige Anordnung Beschädigungen vermieden werden sollen.

Bei dieser bekannten Vorrichtung sind zwar schnelle Entformungsvorgänge möglich, die zum Entformen erforderliche Kraft ist jedoch beträchtlich, und es kann nicht sichergestellt werden, daß beim schnellen Entformen nicht doch Beschädigungen an den Gewindegängen auftreten.

Was die Beseitigung von Angußzapfen angeht, ist es bekannt, diese nach Abschluß des eigentlichen Formvorgangs in einem gesonderten Bearbeitungsschritt von dem Kunststoffkörper zu entfernen. Dies kann durch Absägen, Abschneiden, Abschleifen oder Abschmelzen geschehen. Die Entfernung der Angußzapfen erfolgt jedoch bislang erst dann, wenn die Kunststoffkörper vollständig abgekühlt und ausgehärtet sind. Die notwendigen Bearbeitungsschritte finden nach dem Entformen und vollkommen unabhängig von der Kunststoff-Spritzgießmaschine statt. Dies benötigt Zeit und verlängert somit die Gesamtzeit zur Herstellung der Kunststoffkörper, so daß bei der Herstellung von einfachen Massenartikeln häufig auf die Entfernung der Angußzapfen verzichtet wird. Dies wiederum führt jedoch zu Produkten, die in dieser Hinsicht eine mindere Qualität aufweisen.

In der WO/98/58792 ist ein Verfahren zum Herstellen einer Schraubkappe beschrieben. Nach diesem bekannten Verfahren wird die Kappe mit einem entformbaren unteren Rand hergestellt. Dieser Rand wird nachträglich mittels eines separaten Werkzeugs in eine nicht-entformbare Form umgefaltet. Dies geschieht durch sogenanntes Kaltverformen.

Der Erfindung liegt daher die Aufgabe zugrunde, ein Verfahren und eine Vorrichtung der eingangs genannten Art dahingehend weiterzubilden, daß die erwähnten Nachteile vermieden werden. Insbesondere soll es möglich sein, Kunststoffkörper mit Hinterschneidungen schnell zu entformen, so daß die Zykluszeit der Spritzgießmaschine vermindert wird. Des weiteren sollen auch einfache Massenprodukte in hoher Qualität herstellbar sein, ohne daß hierdurch die Herstellungszeit spürbar verlängert wird.

Bei einem Verfahren der eingangs genannten Art wird diese Aufgabe erfindungsgemäß dadurch gelöst, daß der Kunststoffkörper mit dem Entnahmewerkzeug in eine zweite Formgebung umgeformt wird.

Bei einer Vorrichtung der eingangs genannten Art wird die Aufgabe erfindungsgemäß dadurch gelöst, daß das Entnahmewerkzeug Mittel zum Umformen des Kunststoffkörpers in eine zweite Formgebung aufweist.

Gemäß der vorliegenden Erfindung wird der Formhohlraum zum Spritzgießen des Kunststoffkörpers nicht der gewünschten, endgültigen Form des Kunststoffkörpers entsprechend, sondern statt dessen so gewählt, daß zunächst ein Formkörper mit abweichender Formgebung spritzgegossen wird, bei dem bspw. keine Hinterschneidungen vorliegen. Nach dem Spritzgießen wird dann der noch nicht die gewünschte Form aufweisende Kunststoffkörper beim Entformen oder unmittelbar nach dem Entformen umgeformt, um das gewünschte Endprodukt zu erhalten. Die Umformung kann sich sowohl darauf beziehen, daß der Kunststoffkörper insgesamt eine Formänderung erfährt, als auch darauf, daß nur ein Teil des Kunststoffkörpers umgeformt wird, bspw. zur Beseitigung eines Angußzapfens. Auch andere Qualitätsmängel wie etwa Beulen können auf diese Weise beseitigt werden.

Im Gegensatz zum Stand der Technik sind hier keine aufwendigen Maßnahmen zum Entformen von Kunststoffkörpern mit Hinterschneidungen notwendig. Aufgrund der Erfindung läßt sich der Kunststoffkörper nämlich ohne Aufwand durch einfaches Abziehen vom Kern oder Entnehmen aus dem Formhohlraum entformen. Gegenüber den bisher bekannten Verfahren wird die Form des Formhohlraums nicht an die gewünschte, endgültige Form des Kunststoffkörpers angepaßt, sondern es wird umgekehrt eine erste Formgebung des Kunststoffkörpers an den realisierbaren Formhohlraum angepaßt.

Durch die vereinfachte Entformung des Formkörpers läßt sich die Zykluszeit wesentlich verringern, ohne das Verfahren aufwendiger zu gestalten, da das zusätzliche Umformen des Formkörpers einfach realisierbar ist. Auch die hierfür notwendigen Mittel an der Spritzgießmaschine bzw. dem Entnahmewerkzeug sind konstruktiv einfach zu realisieren, wie nachfolgend anhand von Ausführungsbeispielen gezeigt ist.

Da die Umformung erfindungsgemäß mit dem Entnahmewerkzeug durchgeführt wird, wird hierfür keine oder kaum zusätzliche Bearbeitungszeit benötigt. Die Umformung erfolgt vielmehr in zeitlicher Überlappung mit dem Entformen. Infolge dessen kann die Erfindung sehr gut verwendet werden, um auch bei einfachen Massenartikeln Qualitätsverbesserungen wie das Entfernen von Angußzapfen zu erreichen, ohne die Herstellungskosten spürbar zu erhöhen.

Die der Erfindung zugrunde liegende Aufgabe wird auf diese Weise somit vollkommen gelöst.

In einer bevorzugten Ausgestaltung des erfindungsgemäßen Verfahrens wird der Kunststoffkörper im noch nicht ausgehärteten Zustand umgeformt.

Der noch nicht ausgehärtete Zustand des Kunststoffkörpers ergibt sich in der Regel dann, wenn der Kunststoffkörper nach der Entnahme aus dem Formhohlraum noch nicht vollständig abgekühlt ist. Die Maßnahme besitzt den Vorteil, daß der Kunststoffkörper auf diese Weise ohne nennenswerten Kraftaufwand und damit auf einfache Weise und ohne das Risiko von Zerstörung in die zweite Formgebung umgeformt werden kann.

In einer weiteren Ausgestaltung des erfindungsgemäßen Verfahrens weist der Kunststoffkörper eine Achse (R) sowie eine sich unter einem ersten Winkel ($\alpha$) zur Achse (R) erstreckende Fläche auf, wobei die Fläche relativ zur Achse (R) eine Hinterschneidung bildet, und der Kunststoffkörper wird in Richtung der Achse (R) aus dem Formhohlraum entformt, wobei der Kunststoffkörper insoweit mit einer ersten Formgebung spritzgegossen wird, daß die Fläche sich im wesentlichen parallel zur Achse (R) erstreckt.

Eine entsprechende Ausgestaltung der erfindungsgemäßen Vorrichtung besteht darin, daß die Mittel zum Umformen derart ausgebildet sind, daß eine in Entformungsrichtung verlaufende Fläche des Kunststoffkörpers in seiner ersten Formgebung nach dem Umformen zur Entformungsrichtung geneigt verläuft.

Die genannten Maßnahmen präzisieren die beanspruchte Erfindung dahingehend, daß ein Kunststoffkörper, der Hinterschneidungen aufweist, auf besonders einfache Weise und ohne Kraftaufwand aus dem Formhohlraum der Spritzgießmaschine entformbar ist.

Bei einer weiteren Ausgestaltung der Erfindung umfaßt der Kunststoffkörper eine Bodenfläche und eine unter einem zweiten Winkel zu dieser angeordneten Wandfläche, wobei die entsprechende Bodenfläche und Wandfläche des Kunststoffkörpers in seiner ersten Formgebung einen dritten Winkel einschließen.

Diese Maßnahme hat den Vorteil, daß insbesondere bei Hinterschneidungen, die sich an einer zylindrischen Innenwand befinden, insbesondere also bei Innengewinden, eine leichte Herstellbarkeit bzw. Entformbarkeit gegeben ist.

Besonders vorteilhaft ist die Ausführung des Verfahrens dann, wenn der Kunststoffkörper eine Schraubkappe ist, deren Zylindermantel bevorzugt die Wandfläche bildet, die mit der Bodenfläche der Schraubkappe einen zweiten Winkel von 90° einschließt, wobei der dritte Winkel dann größer als 90° gewählt wird. Bei der zylindrischen Form der Schraubkappe ist die Verformung des kegelförmigen Mantels in die Form eines Zylindermantels besonders einfach möglich, wobei der eine Hinterschneidung bildende Bereich vorzugsweise als Gewinde ausgebildet ist.

Wenn der spritzgegossene Kunststoffkörper sofort nach dem Spritzgießen in ein Aufnahmeelement, wie etwa das Entnahmewerkzeug, gebracht wird, läßt sich der Formhohlraum des Spritzgießwerkzeugs bereits nach sehr kurzer Zeit wieder zur Herstellung eines weiteren Kunststoffkörpers füllen, so daß die Leerlaufzeit der Spritzgießmaschine sehr gering ist.

In einer vorteilhaften Weiterbildung des erfindungsgemäßen Verfahrens wird der Kunststoffkörper daher von einem ein Aufnahmeelement bildenden Entnahmewerkzeug aus dem Spritzgießwerkzeug entnommen. Vorzugsweise wird der Kunststoffkörper dabei mit seiner Bodenfläche voran in das Entnahmewerkzeug gebracht, wobei wiederum vorzugsweise der Kunststoffkörper während des Einbringens durch eine konische Fläche des Greifers umgeformt wird. Vorzugsweise umfaßt das Mittel zum Umformen des Kunststoffkörpers demnach eine konische Wand, die den Kunststoffkörper in seiner ersten Formgebung beim Einbringen in das Entnahmewerkzeug mit einer Kraft beaufschlagt.

Hiernach läßt sich die Umformung des Kunststoffkörpers ohne zusätzlichen zeitlichen Aufwand durchführen, da das Umformen während des Einbringens in das Entnahmewerkzeug erfolgt.

Außerdem besitzen die zuletzt genannten Maßnahmen den Vorteil, daß das Umformen des Kunststoffkörpers aus seiner ersten Formgebung allein durch ein Zusammendrücken bewirkt wird, das sich automatisch ergibt, wenn der Kunststoffkörper beim Entformen an der konischen Fläche entlang geführt wird. Ein derartiges Vorgehen beim Umformen ist konstruktiv besonders einfach zu realisieren und erforderlich nur einen geringen Kraftaufwand.

In einer weiteren Ausgestaltung der Erfindung weist der Kunststoffkörper in seiner ersten Formgebung einen Angußzapfen auf und der Angußzapfen wird beim Umformen in die zweite Formgebung entfernt.

Diese Maßnahme ist besonders vorteilhaft, um auch bei einfachen Massenprodukten eine hohe Qualität zu erreichen, indem der Angußzapfen beseitigt wird, ohne daß das eigentliche Herstellungsverfahren hierdurch spürbar verzögert wird.

In einer weiteren Ausgestaltung der zuvor genannten Maßnahme wird der Angußzapfen beim Umformen an einer Stempelfläche plattgedrückt.

Der Stempel ist dabei bevorzugt ein beweglicher Stempel, der gegen den Angußzapfen gedrückt wird. Alternativ kann der Stempel jedoch auch aus einer im wesentlichen starren Fläche bestehen, gegen die der umzuformende Kunststoffkörper gedrückt wird. Die genannte Maßnahme besitzt den Vorteil, daß ein derartiger Umformvorgang mechanisch sehr einfach realisiert werden kann und dabei gleichzeitig sehr wirkungsvoll ist.

In einer weiteren Ausgestaltung der zuvor genannten Maßnahmen wird der Kunststoffkörper beim Umformen erwärmt.

Diese Maßnahme besitzt den Vorteil, daß das Umformen erleichtert wird. Hierdurch werden einerseits Beschädigungen des Kunststoffkörpers vermieden. Andererseits wird das Umformen hierdurch beschleunigt, so daß die gesamte Herstellungszeit des Kunststoffkörpers nochmals verringert ist.

Weitere Vorteile und Ausführungsformen der Erfindung ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Draufsicht auf eine Kunststoff-Spritzgießmaschine, mit der die vorliegende Erfindung ausgeführt werden kann,

Fig. 2 eine Seitenansicht einer Schraubkappe, teilweise geschnitten,

Fig. 3 einen Querschnitt durch einen Teil eines Spritzgießwerkzeugs, wie es zur Herstellung der Schraubkappe gemäß Fig. 2 verwendet werden kann,

Fig. 4 einen Querschnitt eines mit dem in Fig. 3 gezeigten Werkzeug gespritzten Formkörpers,

Fig. 5 einen Querschnitt eines Aufnahmeelements eines Entnahmewerkzeugs, und

Fig. 6 ein weiteres Ausführungsbeispiel der Erfindung.

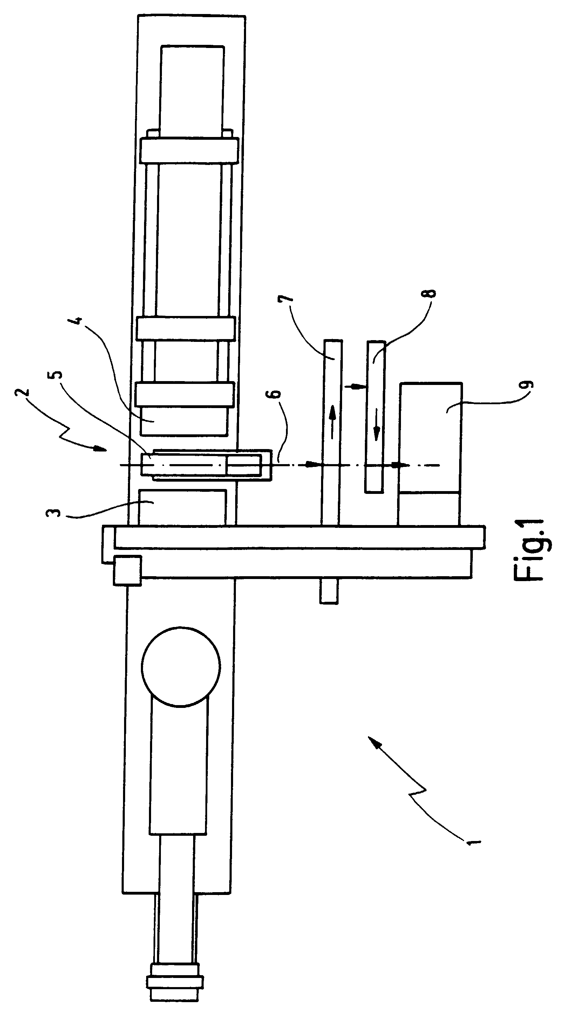

In Fig. 1 bezeichnet das Bezugszeichen 1 insgesamt eine nur schematisch dargestellte Kunststoff-Spritzgießmaschine von an sich bekannter Bauart. Auf die Schilderung der üblichen Komponenten, bspw. des Extruders, Hydraulik und dgl., kann aus diesem Grunde verzichtet werden. Einzelheiten einer derartigen Kunststoff-Spritzgießmaschine sind Z.B. in der DE 42 19 924 A1 beschrieben.

Die Kunststoff-Spritzgießmaschine 1 verfügt über ein sogenanntes Etagenwerkzeug 2, das im wesentlichen aus zwei Werkzeughälften 3, 4 sowie einem dazwischen angeordneten sogenannten Mittelpaket 5 besteht.

Entlang einer radial zur Längserstreckung der Maschine 1 verlaufenden Achse 6 ist ein Handlingsystem (nicht dargestellt) wirksam, mit dem die in der Maschine 1 erzeugten KunststofferZeugnisse nach dem Öffnen des Werkzeugs 2 entformt werden können.

Unmittelbar benachbart zum Mittelpaket 5 ist als Kühlstation ein Abkühlband 7 angeordnet und dazu parallel ein Stapelband 8, das sich wiederum neben einer Verpackungsstation 9 befindet.

Eine solche Kunststoff-Spritzgießmaschine gestattet die Herstellung beliebiger Kunststoffkörper, wobei im folgenden die Herstellung einer Schraubkappe, wie sie bspw. zum Verschließen von Kunststoffflaschen oder ähnlichen Behältern eingesetzt werden kann, beschrieben wird. Neben diesen Schraubkappen ist jedoch auch die Herstellung anders geformter Kunststoffkörper mit Hinterschneidungen möglich.

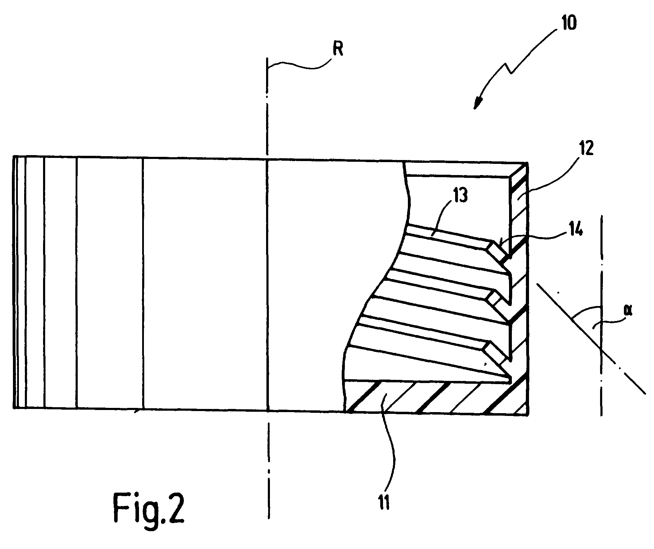

Fig. 2 zeigt in Seitenansicht, teilweise aufgeschnitten, eine Schraubkappe 10, die ein bevorzugtes Anwendungsbeispiel der Erfindung darstellt, ohne diese jedoch darauf einzuschränken.

Die Schraubkappe 10 umfaßt einen geschlossenen Boden 11 von kreisförmiger Gestalt. Vom Boden 11 steht eine hohlzylindrische Wand 12 ab, die in Fig. 2 nach oben offen ist. Auf der Innenseite der Wand 12 sind mit 13 Gewindegänge eines Innengewindes angedeutet, mit dem die Schraubkappe 10 z.B. auf einen Hals einer Flasche oder eines anderen Behälters (nicht dargestellt) aufgeschraubt werden kann. Die Gewindegänge 13 sind hier im Querschnitt in etwa rechteckförmig, wobei die Gewindegänge 13 in Fig. 2 nach oben geneigt sind. Der Neigungswinkel ist in Fig. 2 mit α angedeutet. Die in Fig. 2 obere Fläche der Gewindegänge 13 ist mit 14 bezeichnet. Die Flächen 14 bilden somit eine Hinterschneidung. Infolge dieser Hinterschneidung ist es nicht ohne weiteres möglich, die Schraubkappe 10 mit herkömmlichen Spritzgießwerkzeugen herzustellen. Die Schraubkappen 10 könnten nämlich nicht ohne weiteres in Richtung der Achse R aus dem Werkzeug entformt werden, da die Hinterschneidungen im Bereich der Fläche 14 dem entgegenstehen.

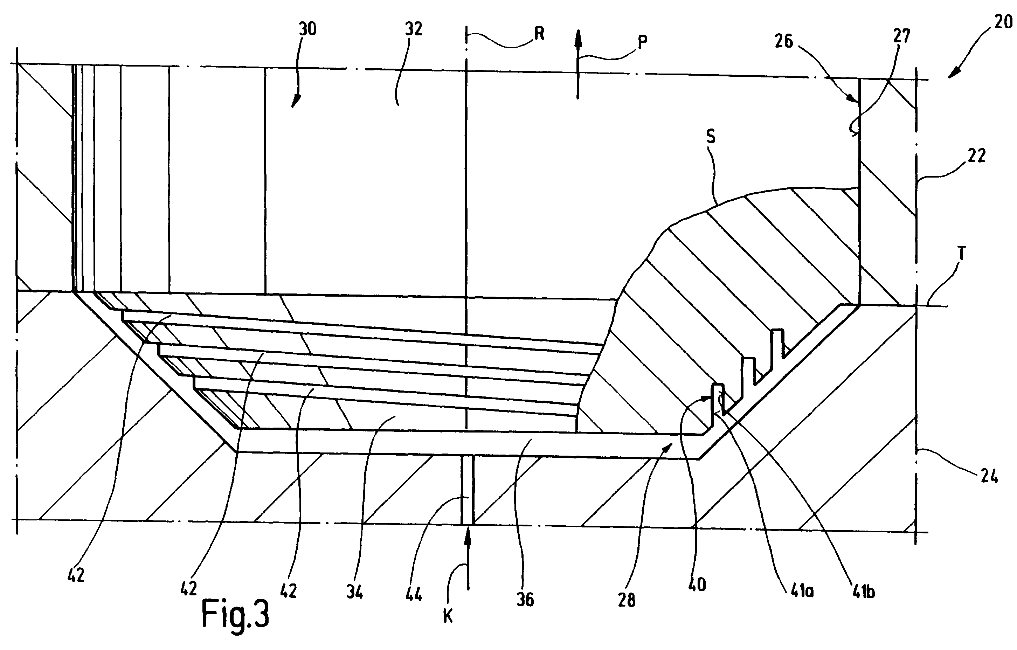

In Fig. 3 ist ein Spritzgießwerkzeug 20 dargestellt, das im wesentlichen aus zwei Werkzeughälften 22, 24 besteht, wobei die Trennhinie zwischen beiden Werkzeughälften mit T bezeichnet ist. Die in Fig. 3 obere Werkzeughälfte 22 weist eine im Querschnitt kreisförmige Durchgangsbohrung 26 auf. Die untere Werkzeughälfte 24 weist eine Ausnehmung 28 auf, die die Form eines Kegelstumpfes besitzt, wobei der Durchmesser der Ausnehmung 28 im Bereich der Trennlinie T dem Durchmesser der Durchgangsbohrung 26 entspricht. Demgegenüber ist der Durchmesser der Ausnehmung 28 im Bereich der der Trennlinie T abgewandten Seite kleiner.

Fig. 3 läßt erkennen, daß die beiden Werkzeughälften 22, 24 so zueinander ausgerichtet sind, daß die mit R gekennzeichneten Achsen der beiden Werkzeughälften 22 und 24 fluchten.

Das Werkzeug 20 besitzt des weiteren einen Kern 30, der einen im Querschnitt kreisförmigen Grundkörper 32 und einen Fortsatz 34 aufweist. Der Grundkörper 32 ist bezüglich seines Durchmessers so dimensioniert, daß er in der Durchgangsbohrung 26 der oberen Werkzeughälfte 22 in Richtung des Pfeiles P verlagerbar aufnehmbar ist. Eine Innenwand 27 der Durchgangsbohrung 26 dient dabei als Führungsfläche.

Der Fortsatz 34 des Kerns 30 ist im wesentlichen kegelstumpfförmig ausgebildet und ragt in die Ausnehmung 28 hinein, wobei ein Hohlraum 36 gebildet wird. Dieser Hohlraum wird allgemein als Formhohlraum 36 bezeichnet.

In den Fortsatz 34 ist - wie sich aus der Schnittansicht S in Fig. 3 ergibt - zumindest eine Vertiefung 40 eingebracht, die sich parallel zur Achse R erstreckt. Insbesondere verlaufen Seitenwände 41a, 41b der Vertiefung 40 parallel zueinander und parallel zur Achse R. Im vorliegenden Ausführungsbeispiel ist die Vertiefung 40 als Nut ausgebildet, die spiralförmig um die Achse R verläuft. In Fig. 3 sind die einzelnen Spiralgänge mit dem Bezugszeichen 42 gekennzeichnet.

In der unteren Werkzeughälfte 24 ist ein Kanal 44 vorgesehen, der in den Formhohlraum 36 mündet. Durch einen Pfeil K ist angedeutet, daß durch diesen Kanal 44 flüssiges Kunststoffmaterial in den Formhohlraum 36 eingebracht werden kann.

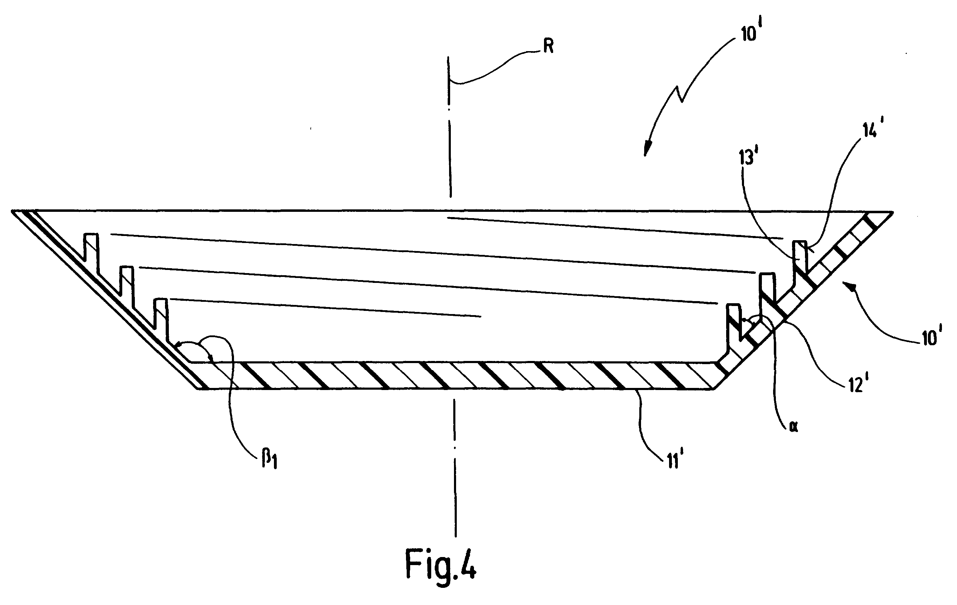

In Fig. 4 ist ein Kunststoffkörper in einer ersten Formgebung 10' als Vorprodukt für die Schraubkappe 10 dargestellt. Der Kunststoffkörper in dieser ersten Formgebung 10' läßt sich mit dem in Fig. 3 beschriebenen Werkzeug 20 herstellen. Die Formgebung 10' weist entsprechend der Formgebung des Hohlraums 36 einen in der Draufsicht kreisförmigen Boden 11' und eine Wand 12' auf, die die Form eines Kegelstumpfmantels besitzt. Der zwischen der Wand 12' und dem Boden 11' gebildete Winkel ist mit $\beta_1$ gekennzeichnet. Dieser Winkel $\beta_1$ ist größer als 90°.

Ein spiralförmiger Vorsprung 13' verläuft parallel zur Achse R und damit rechtwinklig zum Boden 11'. Der Winkel zwischen der Wand 12' und dem Vorsprung 13' ist der Winkel $\alpha$. Dieser Winkel $\alpha$ ist kleiner als 90°.

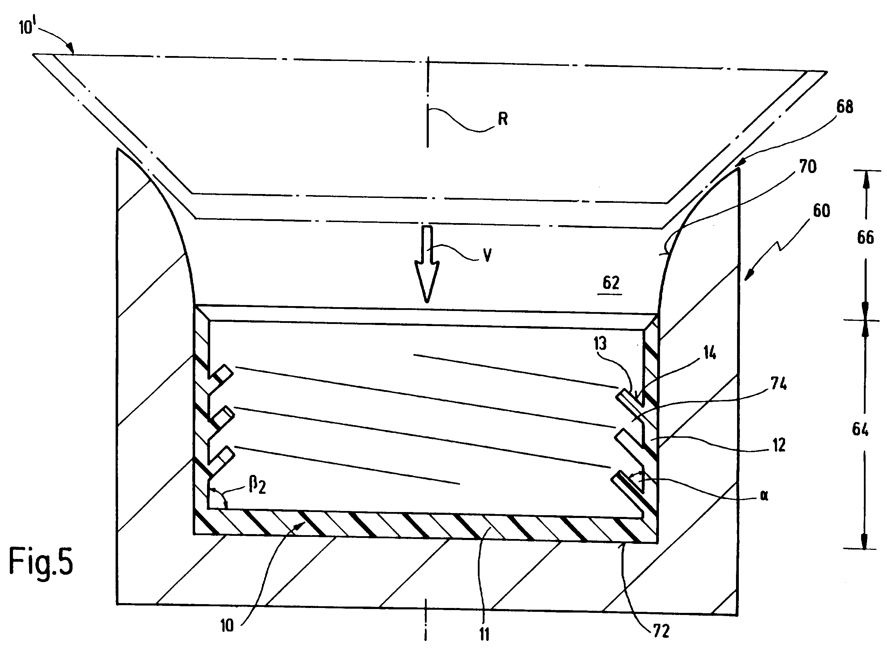

In Fig. 5 ist ein Entnahmewerkzeug in Form eines Greifers 60 dargestellt. Das Entnahmewerkzeug ist Teil des zuvor genannten Handlingsystems der Kunststoff-Spritzgießmaschine, wobei dem Greifer 60 die Aufgabe zukommt, den Kunststoffkörper nach dem Öffnen des Werkzeugs 20 zu greifen, abzutransportieren und dabei in seine zweite Formgebung als Schraubkappe 10 umzuformen.

Hierfür weist der Greifer 60 eine Ausnehmung 62 auf, die in einem unteren Bereich 64 einen Durchmesser besitzt, der im wesentlichen dem Außendurchmesser des Bodens 11 entspricht. Dies bedeutet, daß der Durchmesser der Ausnehmung 62 über den gesamten Bereich 64 konstant ist. An den Bereich 64 schließt sich ein Bereich 66 an, der sich bis in einen Öffnungsbereich 68 des Greifers 60 erstreckt. In dem Bereich 66 nimmt der Durchmesser ausgehend vom Öffnungsbereich 68 hin zum Bereich 64 langsam ab, so daß ein trichterförmiger, konischer Längsabschnitt der Ausnehmung 62 entsteht. Obgleich die in Fig. 5 gezeigte Innenwand 70 der Ausnehmung 62 im Bereich des Bereichs 66 ähnlich einer Parabel verläuft, ist auch ein gerader Verlauf denkbar.

Die Fig. 5 läßt ferner erkennen, daß die Innenwand 70 am Grund der Ausnehmung 62 rechtwinklig zu einer Bodenfläche 72 der Ausnehmung 62 verläuft.

Die Ausnehmung 62 nimmt die Schraubkappe 10 auf, die dabei die gewünschte endgültige Form erhält. Der zwischen der Wand 12 und dem Boden 11 gebildete Winkel $\beta_2$ ist dann nämlich 90° und der Vorsprung 13 der Schraubkappe 10 bildet eine Hinterschneidung, die hier mit dem Bezugszeichen 74 bezeichnet ist.

Die in Fig. 2 gezeigte Schraubkappe 10 wird wie folgt hergestellt:

Zunächst wird in den in Fig. 3 gezeigten Formhohlraum 36 über den Kanal 44 flüssiges Kunststoffmaterial eingebracht. Diese füllt den gesamten Formhohlraum 36 einschließlich der Vertiefungen 40 aus. Nach dem Einfüllen und einer kurzen Verweilzeit werden die beiden Werkzeughälften 22, 24 geöffnet. Da die Vertiefungen 40 parallel zur Achse R verlaufen und damit keine Hinterschneidung bilden, läßt sich der Kunststoffkörper in seiner ersten Formgebung 10' ohne zusätzlichen Aufwand vom Kern 30 abziehen. Der Kunststoffkörper in seiner ersten Formgebung 10' weist dann die in Fig. 4 dargestellte Form auf, die jedoch noch nicht der gewünschten zweiten Formgebung, nämlich der Endform entspricht. Die Wand 12 bildet mit dem Boden 11 nämlich den Winkel $\beta_1$, der um $\alpha = (\beta_1 - 90°)$ zu groß ist.

Das Abziehen des Kunststoffkörpers in der ersten Formgebung 10' vom Kern 30 erfolgt mit dem in Fig. 5 gezeigten Greifer 60. Der Kunststoffkörper wird dabei in die Ausnehmung 62 hineingezogen oder hineingedrückt, wie dies durch den Pfeil V angedeutet ist. Bei diesem Vorgang legt sich die Wand 12 an der Innenwand 70 der Ausnehmung 62 im Bereich des Längsabschnitts 66 an und wird aufgrund der Trichterform mit einer Kraft beaufschlagt. Diese Kraft führt dazu, daß die Wand 12 in die gewünschte zweite Formgebung gedrückt wird. Am Ende des Vorgangs ist die erste Formgebung 10' dann in die in Fig. 5 gezeigte Form der Schraubkappe 10 umgeformt worden.

Das Umformen erfolgt bevorzugt unmittelbar nach dem Spritzgießen, solange das Material des Formteils 10' noch leicht formbar und nicht ausgehärtet ist. Das Abkühlen des Kunststoffkörpers 10 erfolgt vorzugsweise im Greifer 60.

Eine Besonderheit des beschriebenen Verfahrens besteht darin, daß der Formhohlraum nicht entsprechend der gewünschten endgültigen Form des Kunststoffkörpers ausgebildet ist. Vielmehr wird die Form entsprechend einer ersten Formgebung so gewählt, daß keine Hinterschneidungen entstehen, wobei jedoch gewährleistet ist, daß der hergestellte Kunststoffkörper durch einen Umformungsvorgang in die gewünschte zweite bzw. endgültige Formgebung gebracht werden kann. Der Vorteil des beschriebenen Verfahrens besteht insbesondere darin, daß sich der Kunststoffkörper ohne weiteres vom Kern abziehen läßt, so daß auf teure zusätzliche Maßnahmen wie Klappkerne etc. verzichtet werden kann.

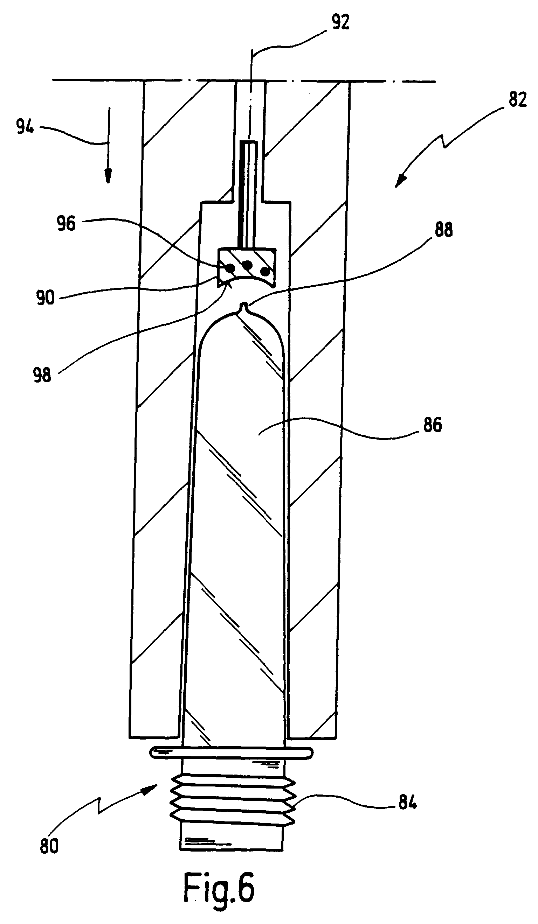

In Fig. 6 ist ein Kunststoffkörper in seiner Gesamtheit mit der Bezugsziffer 80 bezeichnet. Der Kunststoffkörper 80 ist hier eine sogenannte Preform, die bspw. als Zwischenprodukt beim Herstellen von Kunststoffflaschen entsteht. Derartige Preforms werden in einem späteren, hier nicht gezeigten Verarbeitungsschritt zu der endgültigen Flaschenform aufgeblasen.

Die Preform 80 wird in Fig. 6 von dem Greifer 82 eines hier nicht näher dargestellten Entnahmewerkzeugs gehalten. Dabei ragt hier ein Schraubgewinde 84 der Preform aus dem Greifer 82 heraus, während der Körper 86 der Preform in der Aufnahme des Greifers sitzt. Die Preform wird hier in an sich bekannter Weise mit Hilfe von Vakuum in der Aufnahme des Greifers 82 gehalten.

Mit der Bezugsziffer 88 ist ein Angußzapfen bezeichnet, der beim Spritzgießen der Preform 80 im Bereich des Angußpunktes entsteht. Da solche Preforms Massenprodukte sind, wurden derartige Angußzapfen 88 bisher in vielen Fallen nicht entfernt, um den Aufwand und die Herstellungskosten so gering wie möglich zu halten.

Mit der Bezugsziffer 90 ist ein Stempel bezeichnet, der über einen hier nur schematisch angedeuteten Antrieb 92 in Richtung des Pfeils 94 bewegbar ist. Der Stempel 90 weist Heizdrähte 96 auf, mit denen er beheizbar ist.

Zum Umformen der Preform 80 in eine zweite Formgebung ohne Angußzapfen, d.h. zum Entfernen des Angußzapfens 88, wird der beheizte Stempel 90 in dem Greifer 60 gegen den Angußzapfen 88 gedrückt. Dabei wird das Kunststoffmaterial der Preform 80 im Bereich des Angußzapfens 88 angeschmolzen und kann dann leicht verformt werden. Da die Stempelfläche 98 in etwa komplementär zu der gewünschten Formgebung der Spitze der Preform 80 ist, wird der Angußzapfen 88 soweit plattgedrückt, daß er verschwindet. Gleichzeitig wird die Spitze der Preform 80 in die gewünschte Form gebracht.

**Patentansprüche**

1. Verfahren zum Herstellen eines Kunststoffkörpers (10; 80), bei dem der Kunststoffkörper (10; 80) zunächst in einem Formhohlraum (36) eines Spritzgießwerkzeugs (20) mit einer ersten Formgebung (10') spritzgegossen und anschließend mit einem Entnahmewerkzeug (60; 82) aus dem Formhohlraum (36) entformt wird, dadurch gekennzeichnet, daß der Kunststoffkörper (10; 80) mittels des Entnahmewerkzeugs (60; 82) in eine zweite Formgebung umgeformt wird.

2. Verfahren nach Anspruch 1, dadurch gekennzeichnet, daß der Kunststoffkörper (10; 80) im noch nicht ausgehärteten Zustand umgeformt und/oder beim Umformen erwärmt wird.

3. Verfahren nach Anspruch 1 oder 2, dadurch gekennzeichnet, daß der Kunststoffkörper (10) eine Achse (R) sowie eine sich unter einem ersten Winkel ($\alpha$) zur Achse (R) erstreckende Fläche (14) aufweist, wobei die Fläche (14) relativ zur Achse (R) eine Hinterschneidung (74) bildet, daß der Kunststoffkörper (10) in Richtung der Achse (R) aus dem Formhohlraum (36) entformt wird, wobei der Kunststoffkörper (10) insoweit mit einer ersten Formgebung spritzgegossen wird, daß die Fläche (14) sich im wesentlichen parallel zur Achse (R) erstreckt, daß insbesondere der Kunststoffkörper (10) eine Bodenfläche (11) und eine unter einem zweiten Winkel ($\beta_2$) zu dieser angeordnete Wandfläche (12) umfaßt, und daß dann die Bodenfläche (11') und Wandfläche (12') des Kunststoffkörpers (10) in seiner ersten Formgebung (10') einen dritten Winkel ($\beta_1$) einschließen.

4. Verfahren nach Anspruch 3, dadurch gekennzeichnet, daß der Kunststoffkörper (10) als Schraubkappe ausgebildet wird.

5. Verfahren nach Anspruch 4, dadurch gekennzeichnet, daß die Wandfläche (12) als Zylindermantel ausgebildet wird, wobei der zweite Winkel ($\beta_2$) in etwa 90° beträgt, und wobei der dritte Winkel ($\beta_1$) größer als 90° gewählt wird.

6. Verfahren nach einem der Ansprüche 3 bis 5, dadurch gekennzeichnet, daß die Fläche (14) einen Teil eines Gewindes (54, 53) bildet.

7. Verfahren nach einem der Ansprüche 1 bis 6, dadurch gekennzeichnet, daß der Kunststoffkörper (10) in seiner ersten Formgebung (10') von einem ein Aufnahmeelement bildenden Entnahmewerkzeug (60) aus dem Werkzeug (20) entnommen wird.

8. Verfahren nach einem der Ansprüche 3 bis 7, dadurch gekennzeichnet, daß der Kunststoffkörper (10) in seiner ersten Formgebung (10') mit seiner Bodenfläche (11') voran in das Entnahmewerkzeug (60) gebracht wird.

9. Verfahren nach einem der Ansprüche 1 bis 8, dadurch gekennzeichnet, daß der Kunststoffkörper (10) durch eine konische Fläche (70) des Entnahmewerkzeugs (60) umgeformt wird.

10. Verfahren nach Anspruch 1 oder 2, dadurch gekennzeichnet, daß der Kunststoffkörper (80) in seiner ersten Formgebung einen Angußzapfen (88) aufweist und daß der Angußzapfen (88) beim Umformen in die zweite Formgebung entfernt, vorzugsweise beim Umformen an einer Stempelfläche (98) plattgedrückt wird.

11. Vorrichtung zum Herstellen eines Kunststoffkörpers (10; 80), mit einem Spritzgießwerkzeug (20), das zumindest einen Formhohlraum (36) aufweist, wobei der Formhohlraum (36) komplementär zu einer ersten Formgebung (10') des Kunststoffkörpers (10) ausgebildet ist, und mit einem Entnahmewerkzeug (60; 82) zum Entformen des Kunststoffkörpers (10; 80) aus dem Formhohlraum (36), dadurch gekennzeichnet, daß das Entnahmewerkzeug (60; 82) Mittel (62, 70; 90) zum Umformen des Kunststoffkörpers (10; 80) in eine zweite Formgebung aufweist.

12. Vorrichtung nach Anspruch 11, dadurch gekennzeichnet, daß die Mittel (62, 70) zum Umformen derart ausgebildet sind, daß eine Fläche (14) des Kunststoffkörpers (10), die in dessen erster Formgebung (10') in Entformungsrichtung (V) verläuft, nach dem Umformen zur Entformungsrichtung (V) geneigt verläuft.

13. Vorrichtung nach Anspruch 11 oder 12, dadurch gekennzeichnet, daß die Mittel (62, 70) zum Umformen eine konische Wand (70) umfassen, die den Kunststoffkörper (10) in seiner ersten Formgebung (10') beim Einbringen in das Entnahmewerkzeug (60) mit einer Kraft beaufschlagt, wobei vorzugsweise die Mittel (90) zum Umformen eine Stempelfläche (98) aufweisen.

Fig.1

EP 1 072 376 A1

Fig.2

Fig.3

Fig.4

Fig.5

Fig.6

Europäisches
Patentamt

# EUROPÄISCHER RECHERCHENBERICHT

Nummer der Anmeldung

EP 00 11 5211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 195 32 969 A (HERBST RICHARD) 13. März 1997 (1997-03-13) * das ganze Dokument * | 1,4,7,8, 11 | B29C45/00 B29C45/42 |
| A | PATENT ABSTRACTS OF JAPAN vol. 13, no. 25 (M-787), 20. Januar 1989 (1989-01-20) -& JP 63 237933 A (NISSEI PLASTICS IND CO), 4. Oktober 1988 (1988-10-04) * Zusammenfassung * | 1,11 | |
| A | DE 195 00 399 A (SINGER STEFAN) 11. Juli 1996 (1996-07-11) * Spalte 2, Zeile 49 - Zeile 61; Abbildungen 8-11 * | 1,3,11, 12 | |
| A | GB 2 163 695 A (PHILIPS ELECTRONIC AND ASSOCIATED INDUSTRIES LTD) 5. März 1986 (1986-03-05) * das ganze Dokument * | 1-3,11, 12 | |

**RECHERCHIERTE SACHGEBIETE (Int.Cl.7)**

B29C

Der vorliegende Recherchenbericht wurde für alle Patentansprüche erstellt

| Recherchenort | Abschlußdatum der Recherche | Prüfer |
|---|---|---|
| DEN HAAG | 3. November 2000 | Bollen, J |

**ANHANG ZUM EUROPÄISCHEN RECHERCHENBERICHT
ÜBER DIE EUROPÄISCHE PATENTANMELDUNG NR.**

EP 00 11 5211

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2000

| Im Recherchenbericht angeführtes Patentdokument | Datum der Veröffentlichung | Mitglied(er) der Patentfamilie | Datum der Veröffentlichung |
|---|---|---|---|
| DE 19532969 A | 13-03-1997 | EP 0763415 A | 19-03-1997 |
| JP 63237933 A | 04-10-1988 | JP 5044907 B | 07-07-1993 |
| DE 19500399 A | 11-07-1996 | KEINE | |
| GB 2163695 A | 05-03-1986 | KEINE | |

EPO FORM P0461

Für nähere Einzelheiten zu diesem Anhang : siehe Amtsblatt des Europäischen Patentamts, Nr.12/82